# EUROPEAN PATENT SPECIFICATION

(11) **EP 2 050 937 B1**
(45) Date of publication and mention of the grant of the patent: **15.06.2011**
(21) Application number: 08020448.0
(22) Date of filing: 24.02.2005
(51) Int. Cl.: F01N 13/14, F01N 13/08

(54) **Exhaust gas purifying device for engine**
Abgasreinigungsvorrichtung für einen Motor
Dispositif de purification de gaz d'échappement pour moteur

(30) Priority: 24.02.2004 JP 2004047399
(43) Date of publication of application: 22.04.2009
(62) Divisional of application: 05710664.3
(73) Proprietor: Yamaha Hatsudoki Kabushiki Kaisha, Shizuoka-ken Shizuoka 438-8501 (JP)
(72) Inventor: Ooba, Junichi, Iwata-shi Shizuoka-ken 438-8501 (JP); Nishimura, Hidehiro, Iwata-shi Shizuoka-ken 438-8501 (JP); Takii, Osamu, Iwata-shi Shizuoka-ken 438-8501 (JP)
(74) Representative: Grünecker, Kinkeldey, Stockmair & Schwanhäusser Anwaltssozietät

(56) References cited:
- EP-A- 0 356 607
- JP-A- 11 229 866
- US-A- 3 773 894
- US-A- 5 272 873
- US-A- 5 897 843

## Description

The present invention relates to an exhaust gas purifying device for a straddle-type vehicle according to the preamble of independent claim 1. Such an exhaust gas purifying device can be taken from the prior art document US 5,272,873. In particular, said prior art document discusses the functional arrangement of the respective elements within the exhaust gas purifying device.

Moreover, some conventional exhaust gas purifying devices for a motorcycle engine are configured such that: a first catalyst is provided in an exhaust pipe at its upstream side connected to the engine; a second catalyst is provided in the exhaust pipe at its downstream side connected to a muffler (silencer); and a secondary air supply pipe is connected to the exhaust pipe between the first and the second catalysts. Such exhaust gas purifying device is disclosed in JP-Y-2504008, for example.

Meanwhile, in some cases, when the secondary air supply pipe is connected to the exhaust pipe for a motorcycle engine as in the conventional device, the secondary air supply pipe at its portion connected to the exhaust pipe is exposed to the outside, resulting in a concern of a poor appearance.

It is an object of the present invention to provide an exhaust gas purifying device as indicated above, wherein said device is provided with a compact structure and suitable appearance.
According to the present invention, said objective is solved by an exhaust gas purifying device having the features of independent claim 1. Preferred embodiments are laid down in the dependent claims. Hereinafter, the present invention is illustrated and explained by means of preferred embodiments in conjunction with the accompanying drawings. In the drawings wherein:

Fig. 1 is a side view of a scooter-type motorcycle provided with an exhaust gas purifying device in accordance with a first embodiment of the present invention.
Fig. 2 is a side view of an exhaust system of the motorcycle.
Fig. 3 is a schematic view of the exhaust gas purifying device.
Fig. 4 is a sectional view of the exhaust gas purifying device.
Fig. 5 is a sectional view taken along the line V-V of
Fig. 4.

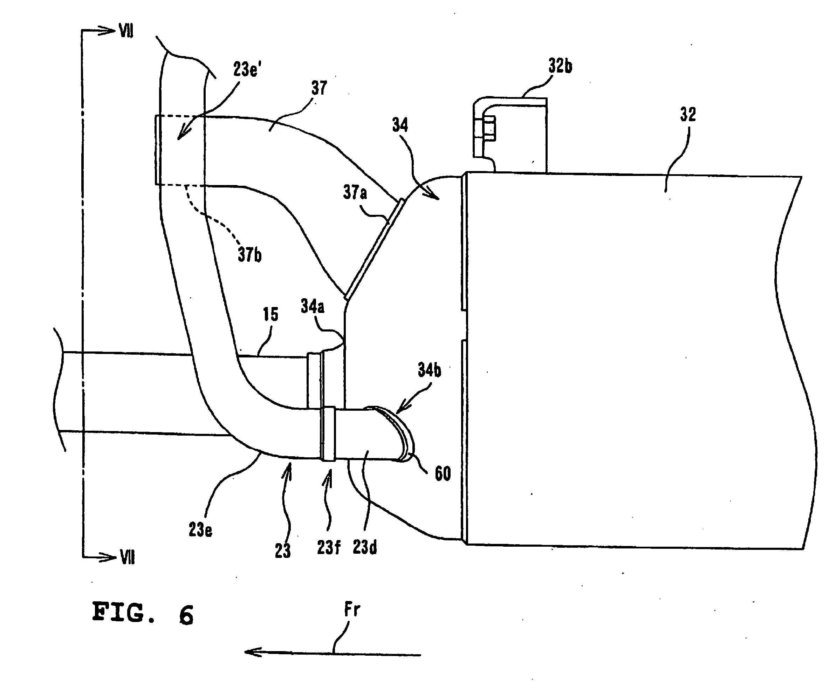

Fig. 6 is a side view of the exhaust gas purifying device at its front side with respect to the moving direction of the vehicle.

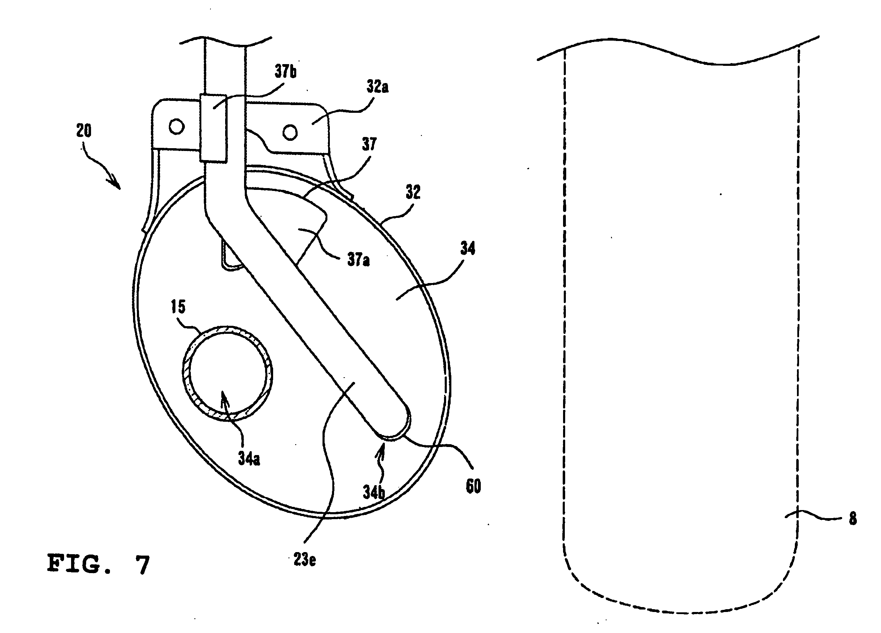

Fig. 7 is a sectional view taken along the line VII-VII of Fig. 6.

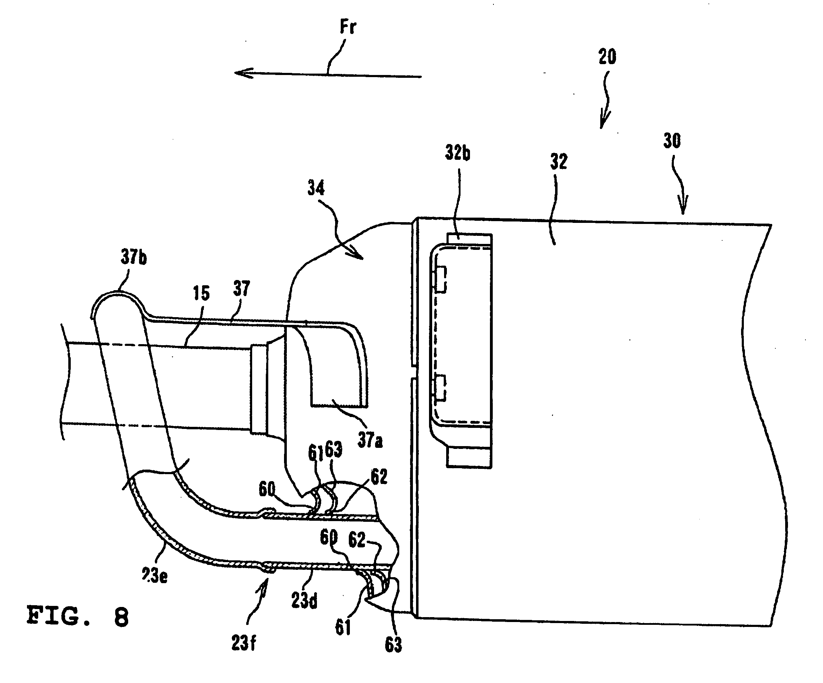

Fig. 8 is a partially sectional view of the exhaust gas purifying device.

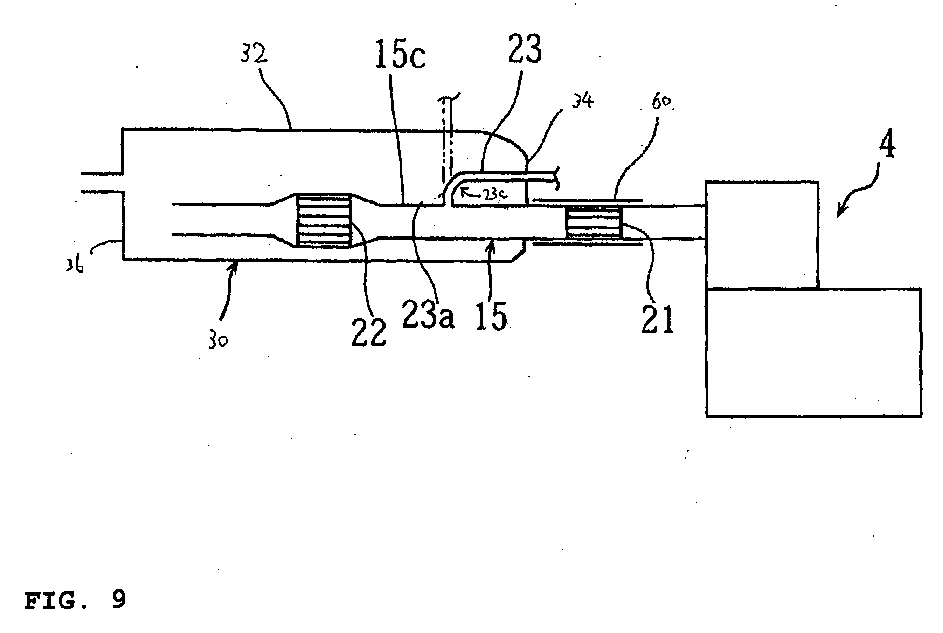

Fig. 9 is a schematic view of an exhaust gas purifying device in accordance with a second embodiment of the present invention.

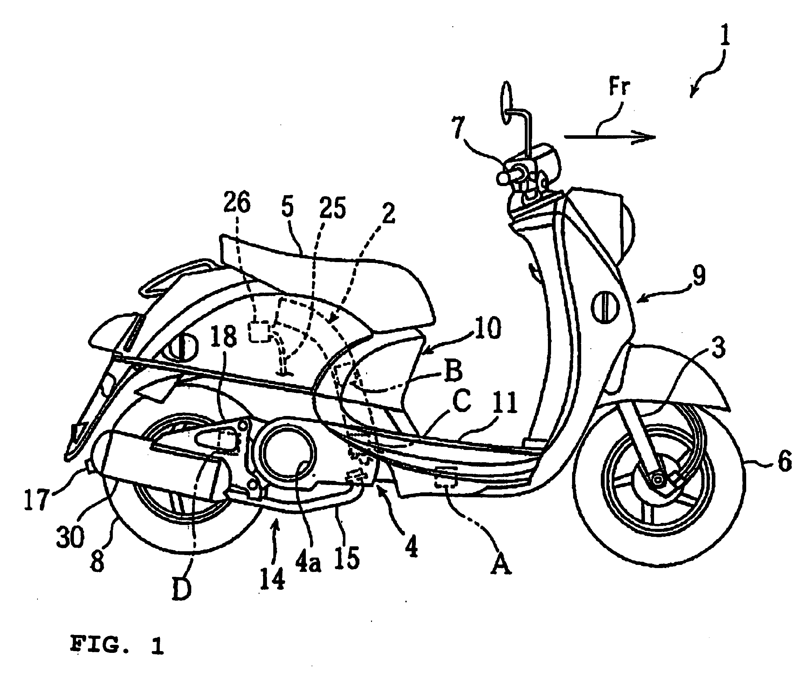

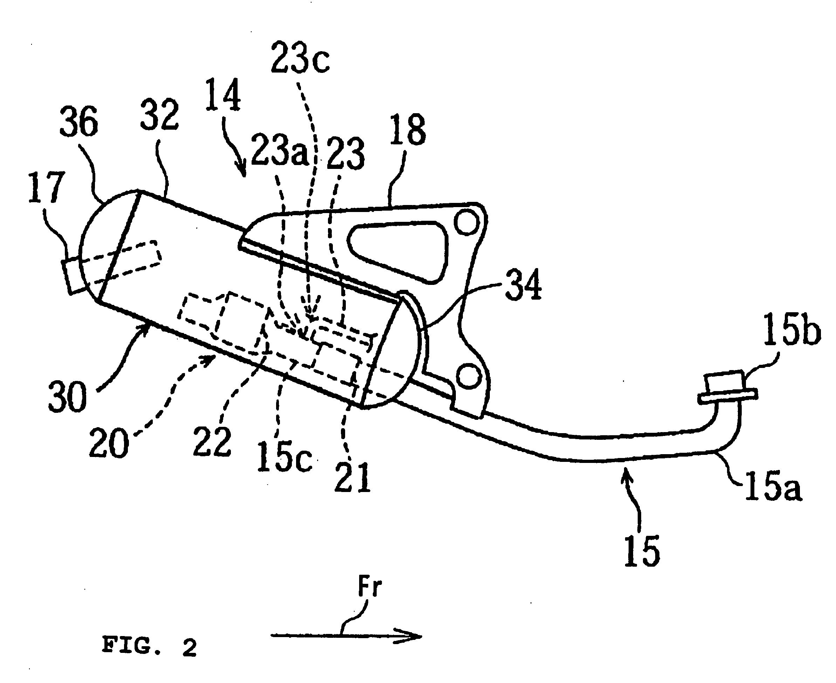

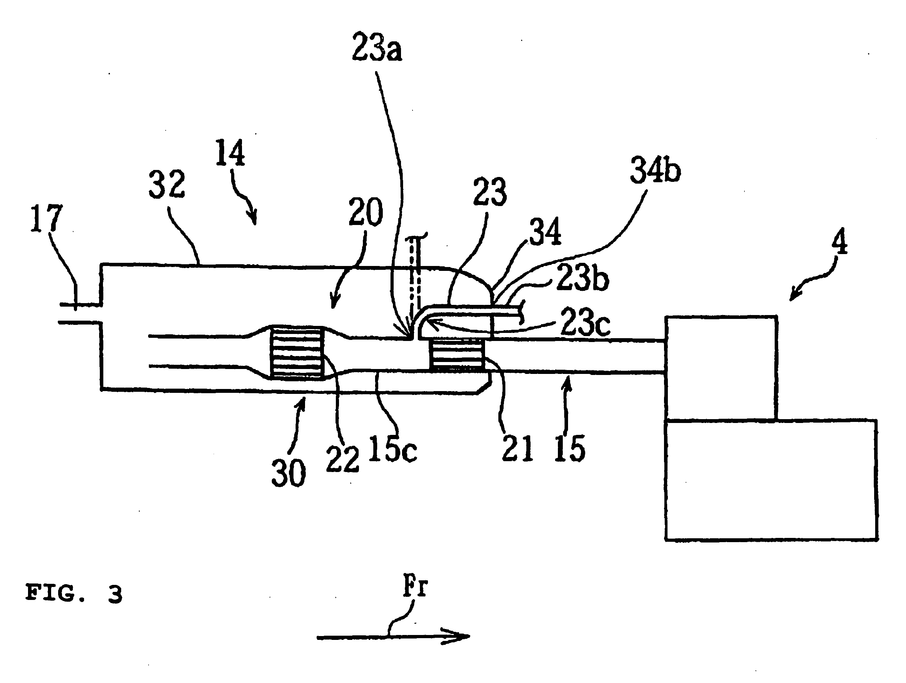

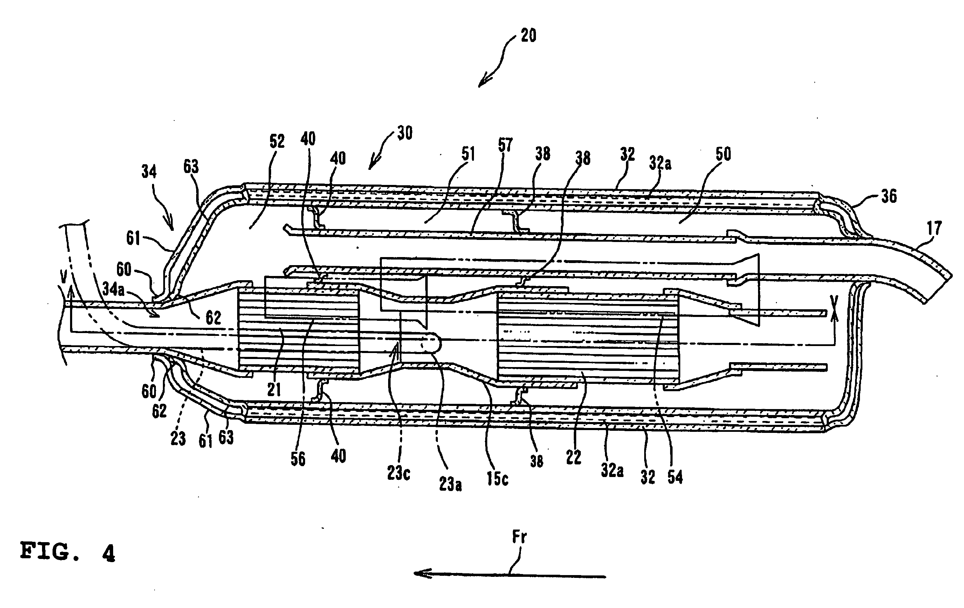

Description will be hereinafter made of the embodiments of the present invention with reference to accompanying drawings. Figs. 1 through 3 are explanatory views of an exhaust gas purifying device for an engine in accordance with a first embodiment of the present invention. Fig. 1 is a side view of a scooter-type motorcycle with the exhaust gas purifying device. Fig. 2 is a side view of an exhaust system of the motorcycle. Fig. 3 is a schematic view of the exhaust gas purifying device. Figs. 4 through 8, which will be described later, show in detail the exhaust gas purifying device for an engine in accordance with the first embodiment.

In Fig. 1, reference numeral 1 denotes a scooter-type motorcycle. An underbone-type body frame 2 at its front end supports a front fork 3 to rotate leftward and rightward. The central portion of the body frame 2 supports a unit swing-type engine unit 4 to swing upward and downward. A seat 5 is mounted above the engine unit 4.

The front fork 3 at its lower and upper ends is provided with a front wheel 6 and a steering handlebars 7, respectively. The engine unit 4 at its rear end is provided with a rear wheel 8. The front fork 3 is covered by a front cover 9, and the region under the seat 5 is covered by a rear cover 10. The region between the front cover 9 and the rear cover 10 is provided with a low-height footboard 11.

The engine unit 4 has a unitized structure of a four-stroke, water-cooled engine, and a transmission case having a V-belt type continuously variable transmission. The engine is mounted with its cylinder axis oriented generally horizontally forward. Reference numeral 4a denotes a cooling air introduction opening.

On the left side of the engine unit 4 (on the opposite side as illustrated in Fig. 1) with respect to the moving direction of the vehicle (direction indicated by the arrow Fr in Fig. 1) is provided an intake system (not shown) having an intake pipe, a carburetor, and an air cleaner. On the right side of the engine unit with respect to the moving direction of the vehicle is provided an exhaust system 14 having an exhaust pipe 15 and a silencer 30.

The exhaust pipe 15 at its upstream end 15a extends rightward with respect to the moving direction of the vehicle from its engine connecting portion 15b, and rearward generally linearly. The silencer 30 is connected to a downstream end 15c of the exhaust pipe 15 to enclose it.

The silencer 30 has a hollow body 32 as a cylindrical member having a generally oval shape in cross section and formed airtightly, the inside of which is defined into plural expansion chambers (sound-absorbing chambers) by partitions. A tail pipe 17 is connected to a rear-end expansion chamber with respect to the moving direction of the vehicle, and an opening of the downstream end 15c of the exhaust pipe 15 is positioned in another expansion chamber. The tail pipe 17 projects outside the silencer through a lid member 36 joined to the hollow body 32 at its rear opening with respect to the moving direction of the vehicle.

A generally triangular bracket 18 is joined to the silencer 30 and the exhaust pipe 15, and fastened to the engine unit 4 with bolts. The exhaust system 14 thereby swings upward and downward along with the engine unit 4.

The exhaust system 14 is provided with an exhaust gas purifying device 20 for purifying NOx, CO and HC in exhaust gas discharged from the engine. The exhaust gas purifying device 20 has an upstream-side catalyst 21 to mainly provide reducing function and a downstream-side catalyst 22 to mainly provide oxidizing function positioned in the exhaust pipe 15 with a predetermined distance between each other. The exhaust pipe 15 at its portion between the upstream-side catalyst 21 and the downstream-side catalyst 22 is connected to a secondary air supply pipe 23.

The upstream-side catalyst 21 and the downstream-side catalyst 22 are positioned in the downstream end 15c accommodated in the hollow body 32 of the silencer 30. The downstream end 15c at its portion where the downstream-side catalyst 22 is located is formed to have a larger diameter than its other portions. The secondary air supply pipe 23 is welded to the downstream end 15c in the vicinity of and downstream from the upstream-side catalyst 21.

The upstream-side catalyst 21, and the secondary air supply pipe 23 at its connected portion 23a to the exhaust pipe 15 are covered by the silencer 30, which functions as a heat insulating portion which encloses the outside of the upstream-side catalyst 21 and as a cover portion to cover the connected portion 23a.

The secondary air supply pipe 23 having a curved portion 23c extends radially outward of the exhaust pipe 15 from the connected portion 23a and curves at its curved portion 23c and then extends in the same direction as the axial direction of the exhaust pipe 15. The secondary air supply pipe 23 then projects outside the silencer 30 through a through hole 34b formed in a lid member 34 which is joined to the hollow body 32 at its front opening with respect to the moving direction of the vehicle. An outside projecting portion 23b of the secondary air supply pipe 23 and the lid member 34 are airtightly joined together by welding. Since the downstream end 15c of the exhaust pipe 15 and the secondary air supply pipe 23 extend in the same direction, they are identical in direction of thermal expansion. Therefore, the difference in expansion between the secondary air supply pipe 23 and the downstream end 15c of the exhaust pipe 15 is reduced, thereby preventing damage to the connected portion 23a of the secondary air supply pipe 23.

Incidentally, in the case that the secondary air supply pipe 23 extends in a direction at right angles to the axis of the exhaust pipe 15, as indicated in Fig. 3 by the phantom lines, since the difference in temperature between the downstream end 15c and the hollow body 32 is large, the connected portion 23a is easily damaged by stress caused by the difference in thermal expansion between the downstream end 15c of the exhaust pipe 15 and the hollow body 32.

Further, the secondary air supply pipe 23 is joined by welding to the exhaust pipe 15, at its connected portion 23a, and also to the through hole 34b of the lid member 34, thereby increasing strength for supporting the secondary air supply pipe 23.

The outside projecting portion 23b of the secondary air supply pipe 23 is connected to an end of a secondary air introduction pipe 25. The other end of the secondary air introduction pipe 25 is connected to a reed valve assembly 26. The reed valve assembly 26 is provided inside the rear cover 10 below the rear portion of the seat 5 and above the rear wheel 8 and has a function to permit the flow of secondary air toward the catalysts only and prevent its backflow. More specifically, secondary air is drawn in the exhaust pipe 15 through the reed valve assembly 26 by negative pressure produced in the exhaust pipe 15. The secondary air introduction pipe 25 is configured by a flexible pipe capable of absorbing upward and downward swinging motion of the engine unit 4.

Note that the reed valve assembly 26 may be positioned under the footboard 11 (A), or on the body frame 2 below the seat 5, at its raised portion (B), or at a crankcase of the engine unit 4 (C), or at the inner side of the bracket 18 (D), as shown in Fig. 1. This allows minimizing the routing length of the secondary air introduction pipe 25.

Incidentally, an air cleaner for the reed valve assembly 26 may be the one especially therefor disposed in the vicinity of and upstream from the assembly 26, or may be the one also used as the intake air cleaner for the engine.

Description will next be made of the effects of this embodiment.

In the exhaust gas purifying device 20 of this embodiment, the upstream-side catalyst 21 and the downstream-side catalyst 22 are located with a distance therebetween in the downstream end 15c of the exhaust pipe 15 inserted in the hollow body 32 of the silencer 30, and the secondary air supply pipe 23 is connected between the upstream-side catalyst 21 and the downstream-side catalyst 22. Thus, the connected portion 23a of the secondary air supply pipe 23 can be covered by the silencer 30, thereby avoiding a poor appearance due to the connected portion 23a exposed to the outside.

Further, since the upstream-side catalyst 21 and the connected portion 23a are accommodated in the silencer 30, the existing silencer 30 can be effectively used as a heat insulating portion for the upstream-side catalyst 21 and also as a cover portion for the connected portion 23a. Thus, the silencer 30 alone can prevent damage caused by heat from the upstream-side catalyst 21, and exposure of the connected portion 23a to the outside, which requires no additional members to cover the upstream-side catalyst and the connected portion, so that increase in the number of parts can be prevented.

In this embodiment, the secondary air supply pipe 23 extends radially of the exhaust pipe 15 from its connected portion 23a to the exhaust pipe 15 and then curves at its curved portion 23c in the same direction as the axial direction of the exhaust pipe 15. Then, the secondary air supply pipe 23 further extends and projects to the outside from the lid member 34 joined to the front end of the hollow body 32, so that the exhaust pipe 15 and the secondary air supply pipe 23 are identical in direction of thermal expansion. This can prevent deformation of the secondary air supply pipe 23 and damage to the connected portion 23a caused by the difference in thermal expansion between the exhaust pipe 15 and the hollow body 32. Further, the secondary air supply pipe 23 is joined to the exhaust pipe 15 and the lid member 34 by welding, thereby increasing strength for supporting the secondary air supply pipe 23.

Description will further be made in detail of the exhaust gas purifying device described above. Fig. 4 is a detailed sectional view of the exhaust gas purifying device in accordance with the first embodiment.

As described above, the silencer 30 includes the hollow body 32, the front lid member 34 of a cup shape joined to the hollow body 32 at its front opening with respect to the moving direction of the vehicle, and the rear lid member 36 joined also to the hollow body at its rear opening with respect to the moving direction of the vehicle. The hollow body 32, the front lid member 34, and the rear lid member 36 each have a double structure. The gap between an outside member and an inside member of the hollow body 32 is filled with glass wool 32a, thereby increasing heat insulating properties of the silencer 30. The inside of the silencer 30 is defined by a first partition 38 and a second partition 40 into a first expansion chamber 50, a second expansion chamber 51, and a third expansion chamber 52 in that order from its rear side with respect to the moving direction of the vehicle. The front lid member 34 includes an outside wall member 61 of a cup shape configuring the outside wall of the silencer 30, and an inside wall member 63 of a cup shape accommodated inside the outside wall member 61 and configuring the inside wall of the silencer 30, and both these members are formed with through holes 34a. The exhaust pipe 15 extends longitudinally of the silencer 30 from the front side to the rear side with respect to the moving direction of the vehicle and is inserted in the through holes 34a, at its downstream end 15c, so that the entire downstream end 15c is accommodated inside the silencer 30.

As described in Fig. 3, the inside of the downstream end 15c is provided with the two catalysts, the upstream-side catalyst 21 and the downstream-side catalyst 22. The upstream-side catalyst 21 and the downstream-side catalyst 22 are both provided inside the downstream end 15c to be located inside the silencer 30. The downstream end 15c is inserted through and supported by the first partition 38 and the second partition 40 inside the silencer 30.

Exhaust gas supplied from the upstream side of the exhaust pipe 15 flows through the upstream-side catalyst 21. After flowing through the upstream-side catalyst 21, the exhaust gas is mixed with secondary air supplied from the secondary air supply pipe 23. The front lid member 34 is formed with a through hole 34b, which is different from the through hole 34a in which the downstream end 15c of the exhaust pipe 15 is inserted (see Fig. 6). The secondary air supply pipe 23 is inserted in the through hole 34b. The secondary air supply pipe 23 extends in the same direction as the axial direction of the downstream end 15c inside the silencer 30, curves toward the exhaust pipe 15, at its curved portion 23c, and connects to the exhaust pipe 15, at its end. The connected portion 23a of the secondary air supply pipe 23a to the downstream end 15c, and the exhaust pipe 15 downstream from the connected portion 23a are accommodated in the silencer 30. Therefore, a poor appearance due to the connected portion 23a exposed outside the silencer 30 can be avoided, and heat generated from the upstream-side catalyst 21 and the downstream-side catalyst 22 when they are activated can be kept in the silencer 30.

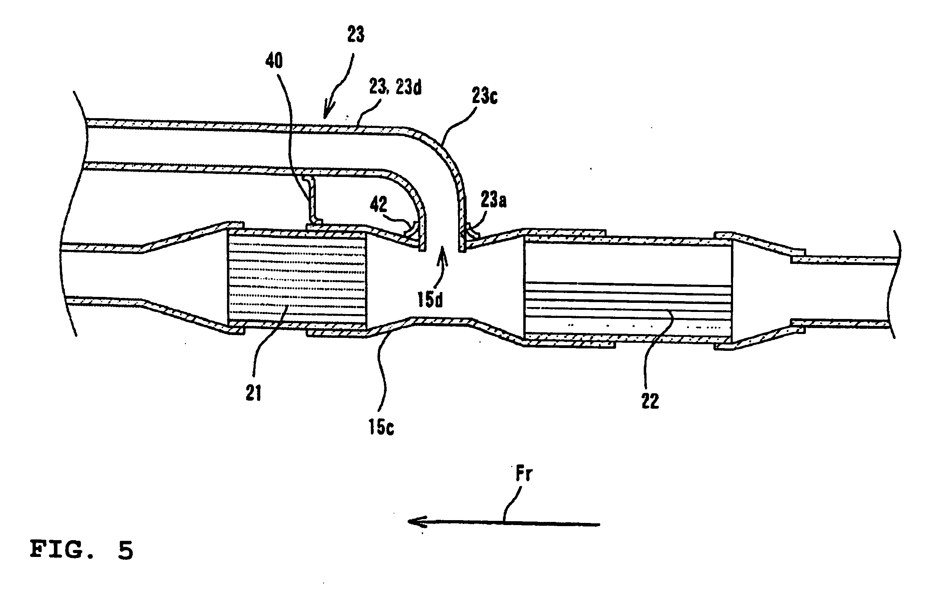

Now, description will be made in detail of the connected portion 23a of the secondary air supply pipe 23 to the downstream end 15c of the exhaust pipe 15, with reference to Fig. 5. Fig. 5 is a sectional view taken along the line V-V of Fig. 4, mainly showing the secondary air supply pipe 23 and the downstream end 15c. The secondary air supply pipe 23 is introduced in the silencer 30 through the through hole 34b formed in the front lid member 34 closer to the vehicle body than the through hole 34a in which the exhaust pipe 15 is inserted (see Figs. 6 through 8), and then extends in the third expansion chamber 52 and the second expansion chamber 51 in the same direction as the axial direction of the downstream end 15c of the exhaust pipe 15, rearward from the front with respect to the moving direction of the vehicle (see Fig. 4). Then, the secondary air supply pipe 23 curves at its curved portion 23c toward the downstream end 15c, namely, to the outside of the vehicle and connects to the downstream end 15c of the exhaust pipe 15, at its end. More specifically, the end of the secondary air supply pipe 23 is joined to a secondary air inlet 15d formed in the downstream end 15c between the upstream-side catalyst 21 and the downstream-side catalyst 22. The secondary air inlet 15d is located in the second expansion chamber 51 of the silencer 30, as shown in Fig. 4. The end of the secondary air supply pipe 23 is fitted in an annular reinforcing member 42. The reinforcing member 42 and the end of the secondary air supply pipe 23 are joined together by welding and also each joined to the side of the downstream end 15c, at the periphery of the secondary air inlet 15d by welding. Thus, strength for supporting the secondary air supply pipe 23 against the downstream end 15c is increased. Further, the secondary air supply pipe 23 is inserted through and supported by the second partition 40. This prevents swinging motion of the secondary air supply pipe 23 in the silencer 30, thereby realizing the exhaust gas purifying device with good durability.

Incidentally, as described later, the secondary air supply pipe 23 is made up of a first supply pipe portion 23d and a second supply pipe portion 23e connected to each other to permit the flow of secondary air. In Fig. 5, the secondary air supply pipe 23 joined to the downstream end 15c is the first supply pipe portion 23d which configures the secondary air supply pipe 23.

Fig. 6 is a side view of the exhaust gas purifying device 20 at its front portion with respect to the moving direction of the vehicle. Fig. 7 is a sectional view taken along the line VII-VII of Fig. 6. In Fig. 7, shown on the right side of the exhaust gas purifying device 20 is the rear wheel 8 of the vehicle. As shown in these drawings, the through hole 34b in which the secondary air supply pipe 23 is inserted is formed closer to the vehicle body, namely, to the rear wheel 8 than the through hole 34a in which the exhaust pipe 15 is inserted. Thus, how the secondary air supply pipe 23 is introduced inside the silencer 30 is prevented from being seen from outside the vehicle, thereby improving appearance of the vehicle.

Further, the secondary air supply pipe 23 is made up of the first supply pipe portion 23d extending inside and outside the silencer 30, and the second supply pipe portion 23e having the same diameter as the first supply pipe portion and connected to the first supply pipe portion 23d outside the silencer 30 to permit the flow of secondary air. The first supply pipe portion 23d is introduced inside the silencer 30 through the through hole 34b and then extends in the moving direction of the vehicle in parallel with the exhaust pipe 15 and connects to the exhaust pipe 15 between the upstream-side catalyst 21 and the downstream-side catalyst 22, as shown in Fig. 5. Meanwhile, the second supply pipe portion 23e extends in the moving direction of the vehicle by some length from its joint 23f to the first supply pipe portion 23d and then curves and extends obliquely upward. Further, the second supply pipe portion 23e is fixed to the silencer 30 by a support member 37. The support member 37 is a plate-shaped member extending from the side of the second supply pipe portion 23e toward the front lid member 34. The support member at its one end is bend to form a mounting portion 37a, which is joined to the front lid member 34 by welding. The other end of the support member is curved along the side of the second supply pipe portion 23e to form a mounting portion 37b, which is joined to the outside surface of the second supply pipe portion 23e by welding. The second supply pipe portion 23e is thus supported by the silencer 30. Incidentally, a bracket 32b is joined to the upper part of the hollow body 32, and the exhaust gas purifying device 20 is mounted to the vehicle body by the bracket 32b.

Fig. 8 is a partially sectional view, as seen from above, of the front side of the exhaust gas purifying device 20 with respect to the moving direction of the vehicle, showing the attached portion of the second supply pipe portion 23e to the first supply pipe portion 23d in section. As shown in Fig. 8, the first supply pipe portion 23d at its outside periphery is joined by welding to a flange 60 formed at the peripheral edge of the through hole 34a of the outside wall member 61 of the front lid member 34, and a flange 62 formed at the peripheral edge of the through hole 34a of the inside wall member 63 of the front lid member. Further, the first supply pipe portion 23d at its end outside the silencer 30 is joined to an end of the second supply pipe portion 23e. More specifically, the lower end of the second supply pipe portion 23e is formed to have a larger diameter than its other portions, and receives the outside end of the first supply pipe portion 23d and is joined thereto by welding. Since the second supply pipe portion is supported by the support member 37 and also joined to the first supply pipe portion, at its joint 23f, by welding, it is securely supported against the exhaust gas purifying device 20.

As described above, in this embodiment, the connected portion 23a of the secondary air supply pipe 23 to the downstream end 15c of the exhaust pipe 15, and the exhaust pipe 15 downstream from the connected portion 23a are accommodated in the silencer 30. Thus, a poor appearance due to the connected portion 23a exposed outside the silencer 30 can be avoided. Further, in this embodiment, the upstream-side catalyst 21 and the downstream-side catalyst 22 are disposed in the exhaust pipe 15 end in the silencer 30. This prevents heat from exhaust gas from spreading, so that time required for the temperature of the catalysts 21, 22 to reach their activation temperature is shortened. Further, since the secondary air supply pipe 23 extends through the third expansion chamber 52 and the second expansion chamber 51 and then connects to the exhaust pipe 15, secondary air slightly increases in temperature while it flows in the secondary air supply pipe 23. Therefore, the secondary air is mixed with exhaust gas after its temperature is increased, thereby preventing the temperature of the catalysts 21, 22 from being greatly reduced by the secondary air.

Further, in the exhaust gas purifying device in accordance with this embodiment, the first supply pipe portion 23d of the secondary air supply pipe 23 is joined to the downstream end 15c of the exhaust pipe 15 at its secondary air inlet 15d to be integral therewith. The integrated members are accommodated in the silencer 30, and then the front opening of the hollow body 32 is covered by the front lid member 34 so that the silencer 30 can be unitized. The unitized silencer 30 can be mounted to the vehicle body in a way such that: the exhaust pipe 15 and the first supply pipe portion 23d extending from the front lid member 34 of the silencer 30 are each joined to the vehicle body, at its upstream side; and the bracket 32b and other mounting members are connected to the vehicle body. Thus, mounting the exhaust gas purifying device 20 to the vehicle body is facilitated.

Next, Fig. 12 is an explanatory view of an exhaust gas purifying device in accordance with a second embodiment of the present invention, in which similar parts are denoted by the same reference numerals as in Fig. 3. This embodiment is configured such that: an upstream-side catalyst 21 is positioned in an exhaust pipe 15 outside a silencer 30; a downstream-side catalyst 22 is located in the silencer 30; a connected portion 23a of a secondary air supply pipe 23 is covered by the silencer 30; and the exhaust pipe 15 at the periphery of its portion where the upstream-side catalyst 21 is located is enclosed by a heat protector 60, which functions as a heat insulating portion. In this embodiment, since the connected portion 23a of the secondary air supply pipe 23 is covered by the silencer 30 as a cover member, a poor appearance due to the connected portion 23a exposed to the outside can be avoided. Further, since the upstream-side catalyst 21 is enclosed by the existing heat protector 60, effect caused by heat, as well as a poor look can be prevented without cost increase.

In the foregoing description, the single exhaust pipe 15 is connected to the engine. However, this may be modified in a way such that a plurality of exhaust pipes are connected to the engine and each introduced inside the silencer 30. Alternatively, a plurality of exhaust pipes connected to the engine may be collected together upstream from the silencer 30 into a single pipe, which is then introduced in the silencer 30. Further, in the foregoing description, the two catalysts, the upstream-side catalyst 21 and the downstream-side catalyst 22 are provided in the exhaust pipe 15, but only a single catalyst may be provided therein.

## Claims

1. Exhaust gas purifying device (20), especially for a straddle-type vehicle, including:
an exhaust pipe (15) connected to an engine (4);
an upstream-side catalyst (21) and a downstream-side catalyst (22) located in the exhaust pipe (15);
a secondary air supply pipe (23) connected to the exhaust pipe (15) between the upstream-side catalyst (21) and the downstream-side catalyst (22), wherein said secondary air supply pipe (23) comprises a connected portion (23a) at one end thereof being connected to a portion of the exhaust pipe (15), and an other end of said secondary air supply pipe (23) being connected to a reed valve assembly (26), **characterized in that** the secondary air supply pipe comprises a curved portion (23c) which extends radially out of the exhaust pipe (15) from the connected portion (23a) and curves to extent in the same direction as an axle direction of the exhaust pipe (15).

2. Exhaust gas purifying device according to claim 1, **characterized in that** an upstream catalyst accommodating part comprises a wall member elongated from a downstream end of the upstream-side catalyst (21) to a connection between the upstream-side catalyst accommodating part and the secondary air supply pipe (23) to be formed integral therewith.

3. Exhaust gas purifying device according to claim 1 or 2, **characterized in that** the secondary air supply pipe (23) is joined by welding to the exhaust pipe (15) at said connected portion (23a).

4. Exhaust gas purifying device according to one of the claims 1 to 3, **characterized in that** said connected portion (23a) of the secondary air supply pipe (23) is fitted in an annular reinforcing member (42).

5. Exhaust gas purifying device according to one of the claims 1 to 4, **characterized in that** said secondary air supply pipe (23) is connected to the reed valve assembly (26) by a secondary air introduction pipe (25) which is configured by a flexible pipe.

6. Exhaust gas purifying device according to one of the claims 1 to 5, **characterized in that** said reed valve assembly (26) is provided with an air cleaner.

7. Exhaust gas purifying device according to one of the claims 1 to 6, **characterized by** a silencer (30) accommodating at least that portion of the exhaust pipe (15), where it is connected to the secondary air supply pipe (23), and at least a portion of the exhaust pipe (15) downstream from the connecting portion (23a).

8. Exhaust gas purifying device according to claim 7, **characterized in that** the secondary air supply pipe (23) includes a first supply pipe portion (23d) and a second supply pipe portion (23e) connected to each other to permit a flow of secondary air, one end of the first supply pipe portion (23d) comprises the connected portion (23a) being connected to the exhaust pipe (15), and the other end of the first supply pipe portion (23d) being connected to an end of the second supply pipe portion (23e) outside the silencer (30).

9. Exhaust gas purifying device according to claim 8, **characterized in that** the silencer (30) has a through hole (34b) for allowing insertion of an outside periphery of the first supply pipe portion (23d), the outside periphery of the first supply pipe portion (23d) is joined to an edge of the through hole (34b), and the first supply pipe portion (23d) and the second supply pipe portion (23e) are joined together outside the silencer (30).

10. Exhaust gas purifying device for a straddle-type vehicle according to one of the claims 7 to 9, **characterized in that** the silencer (30) includes a hollow body (32) forming the side of the silencer (30) and a lid member (34) joined to an opening of the hollow body (32), and the secondary air supply pipe (23) is inserted in the lid member (34).

11. Exhaust gas purifying device according to one of the claims 10, **characterized in that** the secondary air supply pipe (23) is joined by welding to a through hole (34b) of the lid member (34).

## Patentansprüche

1. Abgasreinigungsvorrichtung (20), insbesondere für ein Spreizsitz-Fahrzeug, die enthält:
eine Abgasleitung (15), die mit einem Motor (4) verbunden ist;
einen Katalysator (21) der stromauf liegenden Seite sowie einen Katalysator (22) der stromab liegenden Seite, die sich in der Abgasleitung (15) befinden;
eine Sekundärluft-Zuführleitung (23), die mit der Abgasleitung (15) zwischen dem Katalysator (21) der stromauf liegenden Seite und dem Katalysator (22) der stromab liegenden Seite verbunden ist, wobei die Sekundärluft-Zuführleitung (23) einen verbundenen Abschnitt (23a) umfasst, der an seinem einen Ende mit einem Abschnitt der Abgasleitung (15) verbunden ist, und ein anderes Ende der Sekundärluft-Zuführleitung (23) mit einer Membranventilanordnung (26) verbunden ist, **dadurch gekennzeichnet, dass** die Sekundärluft-Zuführleitung einen gekrümmten Abschnitt (23c) umfasst, der sich von dem verbundenen Abschnitt (23a) aus radial aus der Abgasleitung (15) heraus erstreckt und so gekrümmt ist, dass er in der gleichen Richtung verläuft wie eine Achsenrichtung der Abgasleitung (15).

2. Abgas-Reinigungsvorrichtung nach Anspruch 1, **dadurch gekennzeichnet, dass** ein Teil zum Aufnehmen des stromauf liegenden Katalysators ein Wandelement umfasst, das sich in Längsrichtung von einem stromab liegenden Ende des stromauf liegenden Katalysators (21) der stromauf liegenden Seite zu einer Verbindung zwischen dem Teil zum Aufnehmen des Katalysators der stromauf liegenden Seite und der Sekundärluft-Zuführleitung (23) so erstreckt, dass es integral damit ausgebildet ist.

3. Abgas-Reinigungsvorrichtung nach Anspruch 1 oder 2, **dadurch gekennzeichnet, dass** die Sekundärluft-Zuführleitung (23) durch Schweißen an dem verbundenen Abschnitt (23a) mit der Abgasleitung (15) verbunden wird.

4. Abgas-Reinigungsvorrichtung nach einem der Ansprüche 1 bis 3, **dadurch gekennzeichnet, dass** der verbundene Abschnitt (23a) der Sekundärluft-Zuführleitung (23) in ein ringförmiges Verstärkungselement (42) eingesetzt ist.

5. Abgas-Reinigungsvorrichtung nach einem der Ansprüche 1 bis 4,
**dadurch gekennzeichnet, dass** die Sekundärluft-Zuführleitung (23) über eine Sekundärluft-Einführleitung (23), die als eine flexible Leitung ausgeführt ist, mit der Membranventilanordnung (26) verbunden ist.

6. Abgas-Reinigungsvorrichtung nach einem der Ansprüche 1 bis 5,
**dadurch gekennzeichnet, dass** die Membranventilanordnung (26) mit einem Luftfilter versehen ist.

7. Abgas-Reinigungsvorrichtung nach einem der Ansprüche 1 bis 6,
**gekennzeichnet durch** einen Schalldämpfer (30), der wenigstens den Abschnitt der Abgasleitung (15), an dem sie mit der Sekundärluft-Zuführleitung (23) verbunden ist, sowie wenigstens einen Abschnitt der Abgasleitung (15) aufnimmt, der stromab von dem Verbindungsabschnitt (23a) liegt.

8. Abgas-Reinigungsvorrichtung nach Anspruch 7, **dadurch gekennzeichnet, dass** die Sekundärluft-Zuführleitung (23) einen ersten Zuführleitungsabschnitt (23d) sowie einen zweiten Zuführleitungsabschnitt (23e) enthält, die miteinander verbunden sind, um einen Strom von Sekundärluft zu ermöglichen, wobei ein Ende des ersten Zuführleitungsabschnitts (23d) den verbundenen Abschnitt (23a) umfasst, der mit der Abgasleitung (15) verbunden ist, und das andere Ende des ersten Zuführleitungsabschnitts (23d) mit einem Ende des zweiten Zuführleitungsabschnitts (23e) außerhalb des Schalldämpfers (30) verbunden ist.

9. Abgas-Reinigungsvorrichtung nach Anspruch 8, **dadurch gekennzeichnet, dass** der Schalldämpfer (30) ein Durchgangsloch (34b) aufweist, das Einführen eines Außenumfangs des ersten Zuführleitungsabschnitts (23d) ermöglicht, wobei der Außenumfang des ersten Zuführleitungsabschnitts (23d) mit einem Rand des Durchgangslochs (34b) verbunden ist und der erste Zuführleitungsabschnitt (23d) sowie der zweite Zuführleitungsabschnitt (23e) außerhalb des Schalldämpfers (30) miteinander verbunden sind.

10. Abgas-Reinigungsvorrichtung für ein Spreizsitz-Fahrzeug nach einem der Ansprüche 7 bis 9, **dadurch gekennzeichnet, dass** der Schalldämpfer (30) einen hohlen Körper (32), der die Seite des Schalldämpfers (30) bildet, sowie ein Deckelelement (34) enthält, das mit einer Öffnung des hohlen Körpers (32) verbunden ist, und die Sekundärluft-Zuführleitung (23) in das Deckelelement (34) eingeführt ist.

11. Abgas-Reinigungsvorrichtung nach Anspruch 10, **dadurch gekennzeichnet, dass** die Sekundärluft-Zuführleitung (23) durch Schweißen mit einem Durchgangsloch (34b) des Deckelelementes (34) verbunden wird.

## Revendications

1. Dispositif de purification de gaz d'échappement (20), en particulier pour un véhicule du type à enfourcher, comprenant :
un tuyau d'échappement (15) relié à un moteur (4) ;
un catalyseur amont (21) et un catalyseur aval (22) placés dans le tuyau d'échappement (15) ;
un tuyau d'alimentation en air secondaire (23) relié au tuyau d'échappement (15) entre le catalyseur amont (21) et le catalyseur aval (22), étant précisé que le tuyau d'alimentation en air secondaire (23) comprend, à une extrémité, une partie reliée (23a) qui est reliée à une partie du tuyau d'échappement (15), une autre extrémité du tuyau d'alimentation en air secondaire (23) étant reliée à un ensemble de clapet à lame (26), **caractérisé en ce que** le tuyau d'alimentation en air secondaire comprend une partie courbe (23c) qui sort du tuyau d'échappement (15) radialement, à partir de la partie reliée (23a), et qui décrit une courbe pour s'étendre dans le même sens qu'un sens axial du tuyau d'échappement (15).

2. Dispositif de purification de gaz d'échappement selon la revendication 1, **caractérisé en ce qu'**une partie de logement de catalyseur amont comprend un élément de paroi qui s'étend d'une extrémité aval du catalyseur amont (21) à une liaison entre la partie de logement de catalyseur amont et le tuyau d'alimentation en air secondaire (23) à former d'une seule pièce avec celle-ci.

3. Dispositif de purification de gaz d'échappement selon la revendication 1 ou 2, **caractérisé en ce que** le tuyau d'alimentation en air secondaire (23) est relié au tuyau d'échappement (15) par soudage au niveau de ladite partie reliée (23a).

4. Dispositif de purification de gaz d'échappement selon l'une des revendications 1 à 3, **caractérisé en ce que** la partie reliée (23a) du tuyau d'alimentation en air secondaire (23) est montée dans un élément de renforcement annulaire (42).

5. Dispositif de purification de gaz d'échappement selon l'une des revendications 1 à 4, **caractérisé en ce que** le tuyau d'alimentation en air secondaire (23) est relié à l'ensemble de clapet à lame (26) par un tuyau d'introduction d'air secondaire (25) qui est conçu comme un tuyau flexible.

6. Dispositif de purification de gaz d'échappement selon l'une des revendications 1 à 5, **caractérisé en ce que** l'ensemble de clapet à lame (26) est pourvu d'un purificateur d'air.

7. Dispositif de purification de gaz d'échappement selon l'une des revendications 1 à 6, **caractérisé par** un silencieux (30) qui reçoit au moins la partie du tuyau d'échappement (15) où celui-ci est relié au tuyau d'alimentation en air secondaire (23), et au moins une partie du tuyau d'échappement (15) située en aval de la partie de liaison (23a).

8. Dispositif de purification de gaz d'échappement selon la revendication 7, **caractérisé en ce que** le tuyau d'alimentation en air secondaire (23) comprend une première partie de tuyau d'alimentation (23d) et une seconde partie de tuyau d'alimentation (23e) qui sont reliées entre elles pour permettre un écoulement d'air secondaire, une extrémité de la première partie de tuyau d'alimentation (23d) comprend la partie reliée (23a) reliée au tuyau d'échappement (15), et l'autre extrémité de la première partie de tuyau d'alimentation (23d) étant reliée à une extrémité de la seconde partie de tuyau d'alimentation (23e) à l'extérieur du silencieux (30).

9. Dispositif de purification de gaz d'échappement selon la revendication 8, **caractérisé en ce que** le silencieux (30) a un trou traversant (34b) pour permettre l'introduction d'une périphérie extérieure de la première partie de tuyau d'alimentation (23d), la périphérie extérieure de la première partie de tuyau d'alimentation (23d) est reliée à un bord du trou traversant (34b), et la première partie de tuyau d'alimentation (23d) et la seconde partie de tuyau d'alimentation (23e) sont reliées entre elles à l'extérieur du silencieux (30).

10. Dispositif de purification de gaz d'échappement pour un véhicule du type à enfourcher selon l'une des revendications 7 à 9, **caractérisé en ce que** le silencieux (30) comprend un corps creux (32) qui forme le côté du silencieux (30), et un élément formant couvercle (34) qui est relié à une ouverture du corps creux (32), et le tuyau d'alimentation en air secondaire (23) est introduit dans l'élément formant couvercle (34).

11. Dispositif de purification de gaz d'échappement selon l'une des revendications 10, **caractérisé en ce que** le tuyau d'alimentation en air secondaire (23) est relié par soudage à un trou traversant (34b) de l'élément formant couvercle (34).
